# EUROPEAN PATENT APPLICATION

(11) **EP 4 807 955 A1**
(43) Date of publication of application: **16.09.2026**
(21) Application number: 24888360.5
(22) Date of filing: 30.08.2024
(51) Int. Cl.: H02K 15/035, H02K 1/278

(54) **METHOD FOR MANUFACTURING ROTOR**

(30) Priority: 09.11.2023 JP 2023191799
(71) Applicant: IHI Corporation, Tokyo 135-8710 (JP)
(72) Inventor: OHASHI, Satoru, Tokyo 135-8710 (JP); ISHIKURO, Yasuhiro, Tokyo 135-8710 (JP); AKIYAMA, Masahiro, Tokyo 135-8710 (JP); AKAMATSU, Yosuke, Tokyo 135-8710 (JP); MATSUYAMA, Yoshimitsu, Tokyo 135-8710 (JP)
(74) Representative: TBK
(86) International application number: PCT/JP2024/031259
(87) International publication number: WO 2025/100058

(57) **Abstract**

A method of manufacturing a rotor, including: a ring-shaped magnet forming step (S10) of forming a ring-shaped magnet by arranging a plurality of segment magnets that have been magnetized, in a ring shape; an insertion step (S20) of inserting a shaft serving as a rotary shaft into a through hole of the ring-shaped magnet from an end portion of the shaft on an axial of the shaft; and a sleeve mounting step (S30) of mounting a sleeve for fixing the ring-shaped magnet to the shaft, to an outer periphery of the ring-shaped magnet positioned around an outer periphery of the shaft.

## Description

### Technical Field

The present disclosure relates to a method of manufacturing a rotor. This application claims the benefit of priority to Japanese Patent Application No. 2023-191799 filed on November 9, 2023, and contents thereof are incorporated herein.

### Background Art

In Patent Literature 1, for example, there is disclosed a rotor for a surface permanent magnetic motor, in which magnets are arranged on a surface of the rotor. In the rotor disclosed in Patent Literature 1, a plate made of iron is wound around an outer periphery of a rotor core. The magnets are mounted on an outer peripheral surface of the plate.

### Citation List

### Patent Literature

Patent Literature 1: JP 2018-107929 A

### Summary

### Technical Problem

For manufacture of the rotor exemplified in Patent Literature 1, there is a manufacturing method involving, for example, bringing the magnetized magnets closer to the plate in a radial direction of the rotor core to mount the magnets onto the outer peripheral surface of the plate. With this method, however, the magnets are attracted to the plate by magnetic forces of the magnets, and are sometimes damaged due to impact generated when the magnets are brought into contact with the plate as a result of the attraction. When the magnets are damaged, there is a risk that the performance of the motor may deteriorate.

As another manufacturing method, there is a manufacturing method involving, for example, mounting unmagnetized magnets onto the outer peripheral surface of the plate and then magnetizing the magnets. With this method, however, a direction of magnetic flux of the magnets to be magnetized suddenly changes in a circumferential direction when the rotor has multiple poles equal to or larger than four poles. Thus, it is difficult to appropriately magnetize the magnets. As a result, there is a risk that the performance of the motor may deteriorate.

The present disclosure has an object to provide a method of manufacturing a rotor, which enables suppression of deterioration of performance of a motor.

### Solution to Problem

In order to solve the problems described above, according to one aspect of the present disclosure, there is provided a method of manufacturing a rotor, including: a ring-shaped magnet forming step of forming a ring-shaped magnet by arranging a plurality of segment magnets that have been magnetized, in a ring shape; an insertion step of inserting a shaft serving as a rotary shaft into a through hole of the ring-shaped magnet from an end portion of the shaft on an axial of the shaft; and a sleeve mounting step of mounting a sleeve so as to surround the ring-shaped magnet positioned around an outer periphery of the shaft.

Further, the ring-shaped magnet forming step may include: a first magnet placement step of placing a first magnet among the plurality of segment magnets on an outer peripheral surface of a ring-shaped magnet forming jig having a columnar or cylindrical shape; a second magnet placement step of placing a second magnet among the plurality of segment magnets at a position spaced apart in an axial direction and a circumferential direction of the ring-shaped magnet forming jig from a position at which the first magnet is placed on the outer peripheral surface of the ring-shaped magnet forming jig; and a side-by-side arrangement step of arranging the first magnet and the second magnet side by side in the circumferential direction of the ring-shaped magnet forming jig by moving at least one of the first magnet or the second magnet in the axial direction of the ring-shaped magnet forming jig.

Further, the ring-shaped magnet forming step may include a jig removing step of removing the ring-shaped magnet forming jig from the ring-shaped magnet formed around the ring-shaped magnet forming jig.

Further, the ring-shaped magnet forming jig may have an end portion being mountable to the end portion of the shaft. In the insertion step, the ring-shaped magnet positioned on the outer peripheral surface of the ring-shaped magnet forming jig that has been mounted to the shaft may be moved along the ring-shaped magnet forming jig onto an outer peripheral surface of the shaft.

Further, in the ring-shaped magnet forming step, adjacent segment magnets among the plurality of segment magnets may be bonded to each other with an adhesive.

Further, in the insertion step, an insertion jig having a tapered outer peripheral surface may be mounted to the end portion of the shaft, and the shaft may be inserted into the through hole of the ring-shaped magnet from the end portion to which the insertion jig has been mounted.

### Advantageous Effects of Invention

According to the present disclosure, it is possible to suppress deterioration of performance of a motor.

### Brief Description of Drawings

FIG. 1 is a longitudinal sectional view for illustrating one example of a configuration of a motor manufactured by a method of manufacturing a rotor according to this embodiment.
FIG. 2 is a transverse sectional view for illustrating one example of a configuration of a rotor.
FIG. 3 is an explanatory flowchart for illustrating a flow of the method of manufacturing a rotor.
FIG. 4A to FIG. 4E are explanatory views for illustrating a ring-shaped magnet forming step.
FIG. 5A to FIG. 5D are explanatory views for illustrating an insertion step.
FIGS. 6 are explanatory views for illustrating a modification example of the ring-shaped magnet forming step and the insertion step.
FIG. 7 is an explanatory view for illustrating a modification example of the insertion step.
FIG. 8A to FIG. 8C are explanatory views for illustrating a sleeve mounting step.

### Description of Embodiments

Now, with reference to the attached drawings, an embodiment of the present disclosure is described in detail. The dimensions, materials, and other specific numerical values represented in the embodiment are merely examples used for facilitating the understanding of the disclosure, and do not limit the present disclosure unless otherwise particularly noted. Elements having substantially the same functions and configurations herein and in the drawings are denoted by the same reference symbols to omit redundant description thereof. Further, illustration of elements with no direct relationship to the present disclosure is omitted.

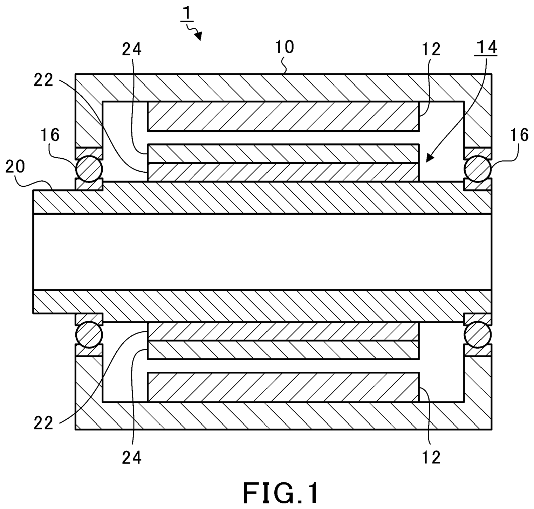

FIG. 1 is a longitudinal sectional view for illustrating one example of a configuration of a motor 1 manufactured by a method of manufacturing a rotor according to this embodiment. The motor 1 includes: a casing 10; a stator 12; a rotor 14; and bearings 16. As described later, the motor 1 is a surface permanent magnetic (SPM) synchronous motor in which magnets are arranged on a surface of the rotor 14.

The casing 10 is formed in a hollow box shape. The stator 12 is formed in a tubular shape, and is fixed to an inner surface of the casing 10. A winding is provided to the stator 12. When an alternating current flows through the winding provided to the stator 12, a rotating magnetic field is generated. The rotor 14 is arranged inside the stator 12. The rotor 14 is rotatably supported by the casing 10 through intermediation of the bearings 16. The rotor 14 is rotated in accordance with the rotating magnetic field.

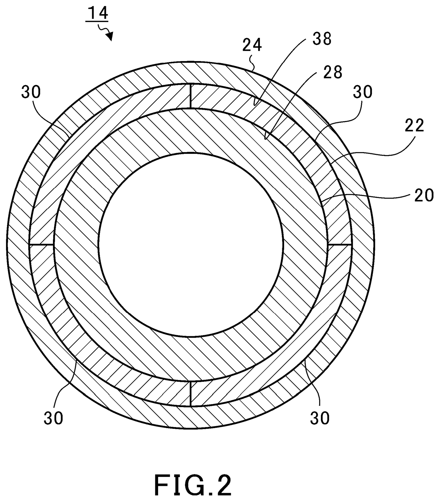

FIG. 2 is a transverse sectional view for illustrating one example of a configuration of the rotor 14. The rotor 14 includes: a shaft 20; a ring-shaped magnet 22; and a sleeve 24. The shaft 20 is formed in a cylindrical or columnar shape. The shaft 20 serves as a rotary shaft of the rotor 14. The shaft 20 is formed of, for example, a ferromagnetic material such as iron.

The ring-shaped magnet 22 is a magnet arranged in a ring shape. A through hole 28 passing in an axial direction is defined inside the ring-shaped magnet 22. The ring-shaped magnet 22 is positioned around an outer periphery of the shaft 20. In other words, the shaft 20 is arranged so as to pass through the through hole 28 of the ring-shaped magnet 22. The ring-shaped magnet 22 is attracted to the shaft 20 by a magnetic force. A center axis of the ring-shaped magnet 22 substantially matches a center axis of the shaft 20.

The ring-shaped magnet 22 includes a plurality of segment magnets 30. The segment magnet 30 has a shape defined by dividing a ring in a circumferential direction. The ring-shaped magnet 22 is formed by arranging the plurality of segment magnets 30 in the circumferential direction in a ring shape.

An outer peripheral surface side of the segment magnet 30 serves as one of two magnetic poles, and an inner peripheral surface side of the segment magnet 30 serves as another one of the two magnetic poles. The segment magnet 30 having the outer peripheral surface side serving as an N-pole is hereinafter sometimes referred to as "N-pole segment magnet 30". The segment magnet 30 having the outer peripheral surface side serving as an S-pole is sometimes referred to as "S-pole segment magnet 30".

In the example of FIG. 2, four segment magnets 30 including two N-pole segment magnets 30 and two S-pole segment magnets 30 are arranged in the circumferential direction so that the magnetic poles alternate with each other to thereby form the ring-shaped magnet 22. That is, the rotor 14 is of four-pole type.

The number of segment magnets 30 is not limited to four, and may be any appropriate even number equal to or larger than two. That is, the number of poles of the rotor 14 is not limited to four, and may be the same as any appropriate even number of segment magnets 30.

The sleeve 24 is formed in a ring shape. A through hole 38 passing in the axial direction is defined inside the sleeve 24. The sleeve 24 is positioned around an outer periphery of the ring-shaped magnet 22. In other words, the shaft 20 and the ring-shaped magnet 22 are arranged so as to pass through the through hole 38 of the sleeve 24. A center axis of the sleeve 24 substantially matches the center axis of the shaft 20 and the center axis of the ring-shaped magnet 22.

The sleeve 24 is arranged so as to surround the ring-shaped magnet 22 positioned around the outer periphery of the shaft 20. An inner peripheral surface of the sleeve 24 is in contact with an outer peripheral surface of the ring-shaped magnet 22. More specifically, a fastening force in a radially inward direction is applied to the sleeve 24. The ring-shaped magnet 22 is pressed in a direction toward the shaft 20 by the fastening force applied to the sleeve 24 in addition to an attracting magnetic force. The sleeve 24 can prevent fly-off of the ring-shaped magnet 22 at the time of rotation of the rotor 14. Further, the sleeve 24 can prevent positional misalignment of the ring-shaped magnet 22.

An adhesive for bonding the ring-shaped magnet 22 to the shaft 20 may be provided between the ring-shaped magnet 22 and the shaft 20. Further, an adhesive for bonding the segment magnets 30 to each other may be provided between adjacent segment magnets 30.

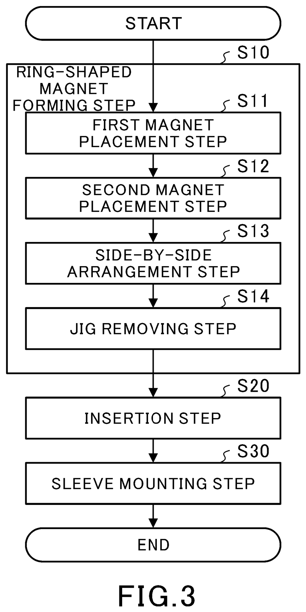

FIG. 3 is an explanatory flowchart for illustrating a flow of a method of manufacturing the rotor 14. As illustrated in FIG. 3, the method of manufacturing the rotor 14 includes: a ring-shaped magnet forming step (S10); an insertion step (S20); and a sleeve mounting step (S30). The ring-shaped magnet forming step (S10), the insertion step (S20), and the sleeve mounting step (S30) may be performed by, for example, a machine or an apparatus such as an industrial robot, or may be performed by an operator.

In the ring-shaped magnet forming step (S10), the plurality of segment magnets 30 that have been magnetized are arranged in a ring shape to thereby form the ring-shaped magnet 22. In the insertion step (S20), the shaft 20 is inserted into the through hole 28 of the ring-shaped magnet 22 from an end portion of the shaft 20 on an axial of the shaft 20. In the sleeve mounting step (S30), the sleeve 24 is mounted to the outer periphery of the ring-shaped magnet 22 that is positioned around the outer periphery of the shaft 20. The ring-shaped magnet forming step (S10), the insertion step (S20), and the sleeve mounting step (S30) are described later in detail.

As illustrated in FIG. 3, the ring-shaped magnet forming step (S10) includes: a first magnet placement step (S11); a second magnet placement step (S12); a side-by-side arrangement step (S13); and a jig removing step (S14).

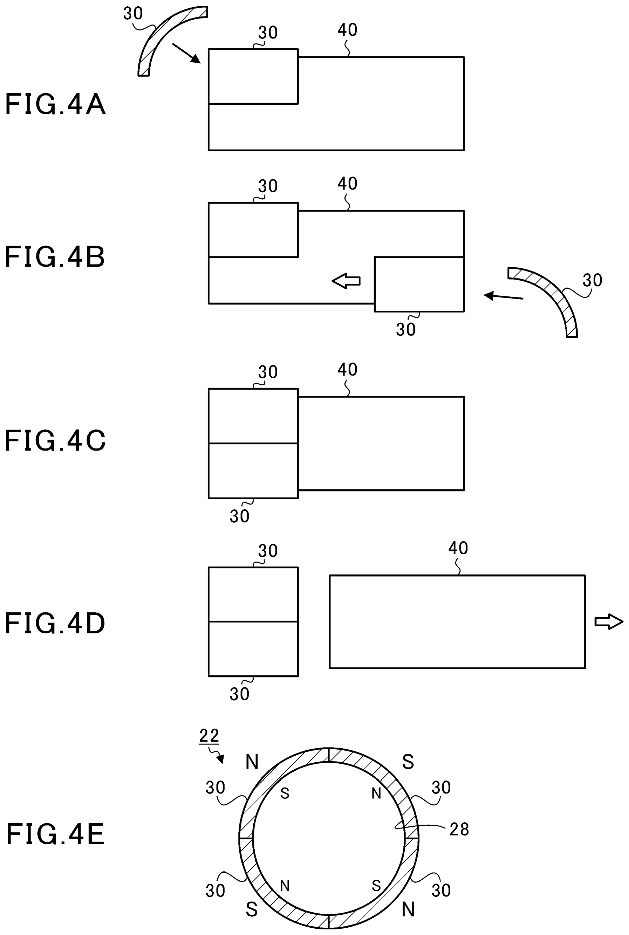

FIG. 4A to FIG. 4E are explanatory views for illustrating the ring-shaped magnet forming step (S10). In the ring-shaped magnet forming step (S10), a ring-shaped magnet forming jig 40 having a columnar or cylindrical shape is used. An outer diameter of the ring-shaped magnet forming jig 40 is substantially the same as an inner diameter of the ring-shaped magnet 22. A length of the ring-shaped magnet forming jig 40 in the axial direction may be twice or more a length of the ring-shaped magnet 22 in the axial direction. The ring-shaped magnet forming jig 40 may be formed of a nonmagnetic material.

In the first magnet placement step (S11), as illustrated in FIG. 4A, a first magnet among the plurality of segment magnets 30 is placed on an outer peripheral surface of the ring-shaped magnet forming jig 40. The first magnet may be any one of the N-pole segment magnet 30 or the S-pole segment magnet 30.

In the first magnet placement step (S11), the first magnet is placed so that an inner peripheral surface of the segment magnet 30, which is the first magnet, is brought into abutment against the outer peripheral surface of the ring-shaped magnet forming jig 40. In the first magnet placement step (S11), the first magnet is placed on one axial end of the ring-shaped magnet forming jig 40.

In the second magnet placement step (S12), as illustrated in FIG. 4B, a second magnet among the plurality of segment magnets 30 is placed at a position spaced apart in the axial direction and the circumferential direction of the ring-shaped magnet forming jig 40 from a position at which the first magnet is placed on the outer peripheral surface of the ring-shaped magnet forming jig 40. When the first magnet placed in the first magnet placement step (S11) is the N-pole segment magnet 30, the second magnet is the S-pole segment magnet 30. When the first magnet placed in the first magnet placement step (S11) is the S-pole segment magnet 30, the second magnet is the N-pole segment magnet 30.

In the second magnet placement step (S12), the second magnet is placed so that the inner peripheral surface of the segment magnet 30, which is the second magnet, is brought into abutment against the outer peripheral surface of the ring-shaped magnet forming jig 40. In the second magnet placement step (S12), the second magnet is placed on an end portion of the ring-shaped magnet forming jig 40 in the axial direction, which is opposite to the end portion on which the first magnet is placed.

Further, in the second magnet placement step (S12), the second magnet is placed at a position shifted from the first magnet by an angle obtained by dividing 360 degrees by the number of segment magnets 30 in the circumferential direction of the ring-shaped magnet forming jig 40. When the number of segment magnets 30 is, for example, four, the second magnet is placed at a position shifted from the first magnet by 90 degrees in the circumferential direction of the ring-shaped magnet 22.

In the side-by-side arrangement step (S13), as indicated by the outlined arrow of FIG. 4B, at least one of the first magnet or the second magnet is moved in the axial direction of the ring-shaped magnet forming jig 40. In the example of FIG. 4B, the position of the first magnet is fixed, and the second magnet is moved in a direction toward the first magnet. Alternatively, the position of the second magnet may be fixed, and the first magnet may be moved in a direction toward the second magnet. Both the first magnet and the second magnet may be moved in directions toward each other.

In the side-by-side arrangement step (S13), as a result of moving at least one of the first magnet or the second magnet in the axial direction of the ring-shaped magnet forming jig 40, the first magnet and the second magnet are arranged side by side in the circumferential direction of the ring-shaped magnet forming jig 40, as illustrated in FIG. 4C.

With the first magnet and the second magnet being arranged side by side, axial positions of the first magnet and the second magnet are aligned. Further, when the first magnet and the second magnet are arranged side by side, an end portion of the first magnet on a side closer to the second magnet and an end portion of the second magnet on a side closer to the first magnet are adjacent to each other.

In the ring-shaped magnet forming step (S10), the first magnet placement step (S11), the second magnet placement step (S12), and the side-by-side arrangement step (S13) are repeated for all the segment magnets 30. For example, after a third segment magnet 30 among the segment magnets 30 is placed as the second magnet with respect to the side-by-side arrangement of the two segment magnets 30 illustrated in FIG. 4C, the third segment magnet 30 is arranged beside the two segment magnets 30. After a fourth segment magnet 30 among the segment magnets 30 is placed as the second magnet with respect to the side-by-side arrangement of the three segment magnets 30, the fourth segment magnet 30 is arranged beside the three segment magnets 30.

The ring-shaped magnet 22 is formed around the ring-shaped magnet forming jig 40 by arranging the plurality of segment magnets 30 side by side in the circumferential direction of the ring-shaped magnet forming jig 40 on the outer peripheral surface of the ring-shaped magnet forming jig 40. After that, the jig removing step (S14) is performed. In the jig removing step (S14), as illustrated in FIG. 4D, the ring-shaped magnet forming jig 40 is removed from the ring-shaped magnet 22 that has been formed around the ring-shaped magnet forming jig 40. After the ring-shaped magnet forming jig 40 is removed, the through hole 28 of the ring-shaped magnet 22 is opened.

In the above-mentioned manner, as illustrated in FIG. 4E, the ring-shaped magnet 22 is formed from the plurality of segment magnets 30. The magnetic poles of the segment magnets 30 alternate with each other in the circumferential direction of the ring-shaped magnet 22. Thus, adjacent segment magnets 30 among the segment magnets 30 are attracted to each other by magnetic forces to thereby retain a shape of the ring-shaped magnet 22.

In this embodiment, as described above, the ring-shaped magnet 22 is formed by using the ring-shaped magnet forming jig 40. Thus, in this embodiment, the ring-shaped magnet 22 can easily be formed from the plurality of segment magnets 30.

Further, in this embodiment, after the ring-shaped magnet forming jig 40 is removed from the ring-shaped magnet 22 formed around the ring-shaped magnet forming jig 40, the insertion step (S20) is performed. Thus, in this embodiment, the shaft 20 can be appropriately inserted into the through hole 28 in an open state, which is defined inside the ring-shaped magnet 22.

In the ring-shaped magnet forming step (S10), the ring-shaped magnet 22 may be formed from the plurality of segment magnets 30 without using the ring-shaped magnet forming jig 40.

In the ring-shaped magnet forming step (S10), adjacent segment magnets 30 among the plurality of segment magnets 30 may be bonded to each other with an adhesive. In this configuration, the shape of the ring-shaped magnet 22 can be more firmly retained. As a result, in this configuration, breakage of the ring-shaped magnet 22 or separation of the segment magnets 30 in the subsequent insertion step (S20) or the sleeve mounting step (S30) can be further prevented.

The adhesive may be made of any appropriate material that can bond the segment magnets 30 to each other, such as an epoxy resin-based adhesive. The adhesive may be applied to circumferential end portions of each of the first magnets in the first magnet placement step (S11). The adhesive may be applied to circumferential end portions of each of the second magnets in the second magnet placement step (S12). The adhesive may be a material having flowability, which is poured into a gap between the first magnet and the second magnet arranged side by side in the side-by-side arrangement step (S13).

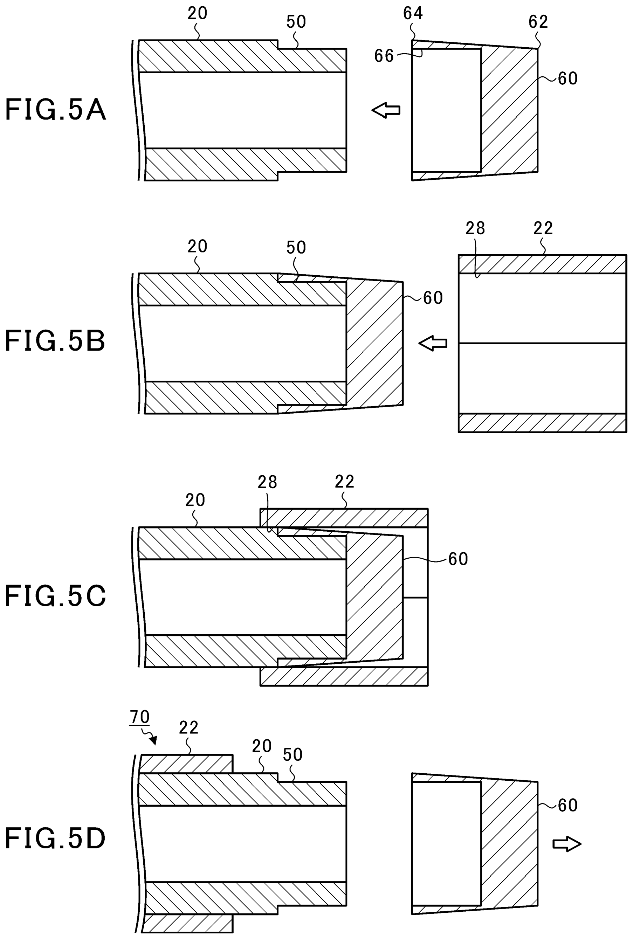

FIG. 5A to FIG. 5D are explanatory views for illustrating the insertion step (S20). As illustrated in FIG. 5A, a level-difference portion 50 having an outer diameter reduced in a stepwise manner is formed on an axial end portion of the shaft 20. The level-difference portion 50 is formed so as to allow, for example, mounting of the bearing 16 for supporting the shaft 20 in the casing.

In the insertion step (S20), as illustrated in FIG. 5A, an insertion jig 60 having a tapered outer peripheral surface is used. The insertion jig 60 is formed in, for example, a truncated conical shape. The outer peripheral surface of the insertion jig 60 has a tapered shape that is inclined with respect to an axial direction of the insertion jig 60.

An outer diameter of a small-diameter end 62 of the insertion jig 60 is smaller than an outer diameter of a large-diameter end 64 of the insertion jig 60. The outer diameter of the large-diameter end 64 of the insertion jig 60 is substantially the same as an outer diameter of the shaft 20, that is, an outer diameter of part of the shaft 20, which is closer to a middle portion with respect to the level-difference portion 50.

A recessed portion 66, which is recessed in the axial direction, is formed in the large-diameter end 64 of the insertion jig 60. An inner diameter of the recessed portion 66 is substantially the same as the outer diameter of the level-difference portion 50 of the shaft 20. A depth of the recessed portion 66 in the axial direction is equal to or larger than a length of the level-difference portion 50 of the shaft 20 in the axial direction.

In the insertion step (S20), as illustrated in FIG. 5A, the insertion jig 60 is mounted to the end portion of the shaft 20 such that the level-difference portion 50 of the shaft 20 is inserted into the recessed portion 66 of the insertion jig 60.

The inner diameter of the ring-shaped magnet 22 is equal to or larger than the outer diameter of the shaft 20. In the insertion step (S20), as illustrated in FIG. 5B, the ring-shaped magnet 22 is arranged in front of the end portion of the shaft 20 to which the insertion jig 60 has been mounted. Then, in the insertion step (S20), as illustrated in FIG. 5B and FIG. 5C, the shaft 20 is inserted into the through hole 28 of the ring-shaped magnet 22 from the end portion to which the insertion jig 60 has been mounted.

In the example of FIG. 5B, a position of the shaft 20 is fixed, and the ring-shaped magnet 22 is moved in a direction toward the shaft 20. As a result, the shaft 20 is inserted into the through hole 28 of the ring-shaped magnet 22 through relative movement. Instead, a position of the ring-shaped magnet 22 may be fixed, and the shaft 20 may be moved in a direction toward the ring-shaped magnet 22 to be inserted into the through hole 28 of the ring-shaped magnet 22. Both the shaft 20 and the ring-shaped magnet 22 may be moved in directions toward each other so that the shaft 20 is inserted into the through hole 28 of the ring-shaped magnet 22.

In the insertion step (S20), after the ring-shaped magnet 22 is arranged at a predetermined position on the shaft 20 in the axial direction, the insertion jig 60 is removed from the shaft 20 as illustrated in FIG. 5D.

In this manner, the ring-shaped magnet 22 is arranged around the outer periphery of the shaft 20. For the convenience of description, a combination of the shaft 20 and the ring-shaped magnet 22 arranged around the outer periphery of the shaft 20 in the insertion step (S20) is hereinafter sometimes referred to as "intermediate 70".

In this embodiment, the ring-shaped magnet 22 is mounted to the shaft 20 by being moved in the axial direction of the shaft 20. Thus, in this embodiment, even when the ring-shaped magnet 22 is attracted to the shaft 20 by the magnetic force of the ring-shaped magnet 22, impact generated when the ring-shaped magnet 22 is brought into contact with the shaft 20 can be suppressed. As a result, in this embodiment, damage to the ring-shaped magnet 22 can be suppressed, and hence deterioration of performance of the motor using the rotor 14 manufactured as described above can be suppressed.

Further, in this embodiment, the ring-shaped magnet 22 formed from the segment magnets 30 that have been magnetized in advance is arranged around the shaft 20. That is, in this embodiment, the segment magnets 30 are magnetized in the form of the segment magnets 30. Thus, in this embodiment, in comparison to a case in which the segment magnets 30 are magnetized after the segment magnets 30 are arranged around the shaft 20, the segment magnets 30 can more easily be magnetized. As a result, in this embodiment, the ring-shaped magnet 22 that has been appropriately magnetized can be formed. Accordingly, deterioration of performance of the motor using the rotor 14 manufactured as described above can be suppressed.

Further, in this embodiment, the insertion jig 60 is used. Thus, even when the shaft 20 has the level-difference portion 50, the shaft 20 can easily be inserted into the through hole 28 of the ring-shaped magnet 22.

In the insertion step (S20), the shaft 20 may be inserted into the through hole 28 of the ring-shaped magnet 22 without using the insertion jig.

A predetermined gap may be defined between the outer peripheral surface of the shaft 20 and the inner peripheral surface of the ring-shaped magnet 22 under a state in which the ring-shaped magnet 22 is arranged around the outer periphery of the shaft 20 as a result of the insertion step (S20). The presence of the gap enables more appropriate fastening with the sleeve 24 in the subsequent sleeve mounting step (S30).

In the insertion step (S20), the ring-shaped magnet 22 is attracted to the shaft 20 by the magnetic force of the ring-shaped magnet 22, and in addition, the shaft 20 and the ring-shaped magnet 22 may be bonded to each other with an adhesive. In this configuration, the ring-shaped magnet 22 can be more firmly held around the shaft 20. As a result, the breakage of the ring-shaped magnet 22 or the separation of the segment magnets 30 in the subsequent sleeve mounting step (S30) can be further prevented.

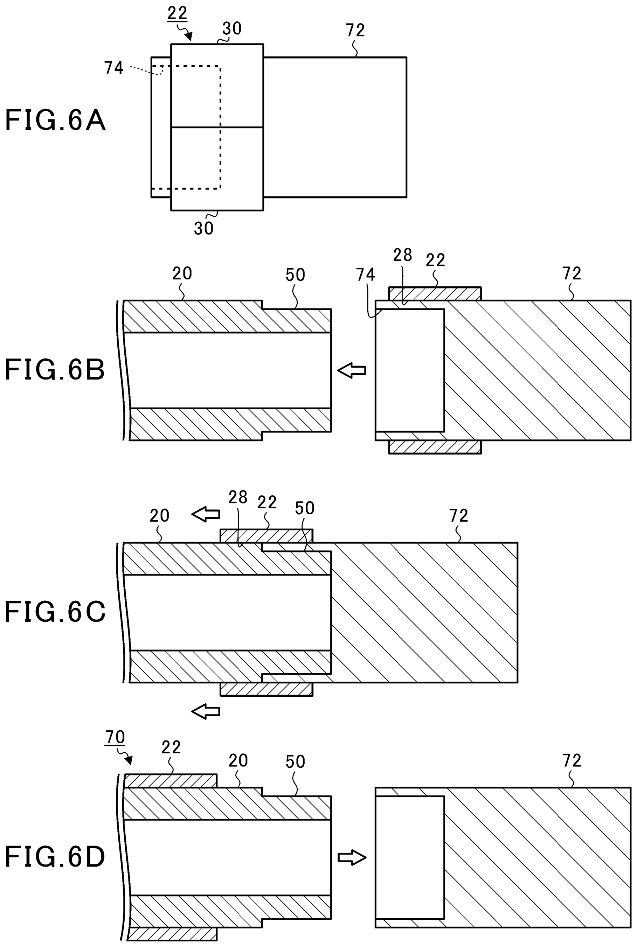

FIGS. 6 are explanatory views for illustrating a modification example of the ring-shaped magnet forming step (S10) and the insertion step (S20). In the modification example illustrated in FIGS. 6, a ring-shaped magnet forming jig 72, which is a modification example of the ring-shaped magnet forming jig 40 used in FIGS. 4, is used.

In FIG. 6A, the ring-shaped magnet forming jig 72 and the ring-shaped magnet 22 are illustrated in side view. An outer diameter of the ring-shaped magnet forming jig 72 is substantially the same as the outer diameter of the shaft 20, that is, the outer diameter of part of the shaft 20, which is closer to the middle portion with respect to the level-difference portion 50.

The ring-shaped magnet forming jig 72 has an end portion that is mountable to the end portion of the shaft 20. More specifically, a recessed portion 74 recessed in the axial direction is formed in the end portion of the ring-shaped magnet forming jig 72. An inner diameter of the recessed portion 74 is substantially the same as the outer diameter of the level-difference portion 50 of the shaft 20. A depth of the recessed portion 74 in the axial direction is equal to or larger than the length of the level-difference portion 50 of the shaft 20 in the axial direction. The recessed portion 74 of the ring-shaped magnet forming jig 72 can be fitted over the level-difference portion 50 of the shaft 20.

In the ring-shaped magnet forming step (S10) of this modification example, the first magnet is placed on an outer peripheral surface of the ring-shaped magnet forming jig 72 in the same manner as in the first magnet placement step (S11) of FIGS. 4. Then, in the same manner as in the second magnet placement step (S12) and the side-by-side arrangement step (S13) of FIGS. 4, the first magnet and the second magnet are arranged side by side in the circumferential direction on the outer peripheral surface of the ring-shaped magnet forming jig 72. Subsequently, for all the segment magnets 30, the first magnet placement step (S11), the second magnet placement step (S12), and the side-by-side arrangement step (S13) are repeated. As a result, as illustrated in FIG. 6A, the ring-shaped magnet 22 is formed on the outer peripheral surface of the ring-shaped magnet forming jig 72.

In the example of FIG. 6A, an example is given in which the ring-shaped magnet 22 is formed around the end portion of the ring-shaped magnet forming jig 72, in which the recessed portion 74 is formed. However, the ring-shaped magnet 22 may be formed around an end portion of the ring-shaped magnet forming jig 72 on the side opposite to the end portion in which the recessed portion 74 is formed.

In this modification example, the ring-shaped magnet forming step (S10) does not include the jig removing step (S14). That is, in this modification example, the process proceeds to the insertion step (S20) under a state in which the ring-shaped magnet 22 is placed on the outer peripheral surface of the ring-shaped magnet forming jig 72.

In FIG. 6B, the ring-shaped magnet forming jig 72, the ring-shaped magnet 22, and the shaft 20 are illustrated in longitudinal sectional view. In the insertion step (S20), as illustrated in FIG. 6B, the end portion of the ring-shaped magnet forming jig 72 is mounted to the end portion of the shaft under a state in which the ring-shaped magnet 22 is placed on the outer peripheral surface of the end portion of the ring-shaped magnet forming jig 72. More specifically, the ring-shaped magnet forming jig 72 is mounted to the end portion of the shaft 20 such that the level-difference portion 50 of the shaft 20 is inserted into the recessed portion 74 of the ring-shaped magnet forming jig 72.

The inner diameter of the ring-shaped magnet 22 is equal to or larger than the outer diameter of the shaft 20. After the ring-shaped magnet forming jig 72 is mounted to the shaft 20, the ring-shaped magnet 22 positioned on the outer peripheral surface of the ring-shaped magnet forming jig 72 is moved onto the outer peripheral surface of the shaft 20 along the ring-shaped magnet forming jig 72, as illustrated in FIG. 6C. As a result, the shaft 20 is inserted into the through hole 28 of the ring-shaped magnet 22 through relative movement.

After the ring-shaped magnet 22 is arranged at a predetermined position on the shaft 20 in the axial direction, the ring-shaped magnet forming jig 72 is removed from the shaft 20, as illustrated in FIG. 6D. In this manner, in this modification example, the intermediate 70 in which the ring-shaped magnet 22 is arranged around the outer periphery of the shaft 20 is formed.

In this modification example, the ring-shaped magnet forming jig 72 has, in addition to a function for forming the ring-shaped magnet 22, a function for inserting the shaft 20 into the ring-shaped magnet 22. In this modification example, in comparison to a configuration in which both a jig for forming the ring-shaped magnet 22 and a jig for inserting the shaft 20 into the ring-shaped magnet 22 are used, the number of jigs can be reduced. In addition, a step of removing a jig for forming the ring-shaped magnet 22 from the ring-shaped magnet 22 can be eliminated.

In this modification example, after the ring-shaped magnet 22 is formed on the outer peripheral surface of the ring-shaped magnet forming jig 72, the ring-shaped magnet forming jig 72 is mounted to the shaft 20. However, the ring-shaped magnet 22 may be formed on the outer peripheral surface of the ring-shaped magnet forming jig 72 after the ring-shaped magnet forming jig 72 without the ring-shaped magnet 22 is mounted to the shaft 20.

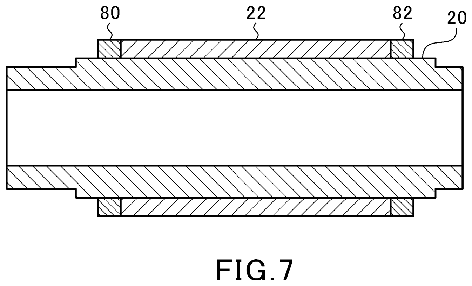

FIG. 7 is an explanatory view for illustrating another modification example of the insertion step (S20). In the insertion step (S20), a first end member 80 may be provided at one axial end portion of the ring-shaped magnet 22, and a second end member 82 may be provided at another axial end portion of the ring-shaped magnet 22. The first end member 80 and the second end member 82 fix an axial position of the ring-shaped magnet 22 around the outer periphery of the shaft 20.

For example, before the shaft 20 is inserted into the through hole 28 of the ring-shaped magnet 22, the first end member 80 is fixed onto the outer peripheral surface of the shaft 20. After the first end member 80 is fixed, the shaft 20 is inserted into the ring-shaped magnet 22 until an end portion of the ring-shaped magnet 22 is brought into abutment against the first end member 80. After the end portion of the ring-shaped magnet 22 is brought into abutment against the first end member 80, the second end member 82 is fixed onto the shaft 20 on the side opposite to the end portion of the ring-shaped magnet 22 against which the first end member 80 is in abutment.

In the configuration in which the first end member 80 and the second end member 82 are provided, the axial position of the ring-shaped magnet 22 can be maintained at an appropriate position. As a result, in this configuration, positional misalignment of the ring-shaped magnet 22, which may be caused in the subsequent sleeve mounting step (S30), can be prevented.

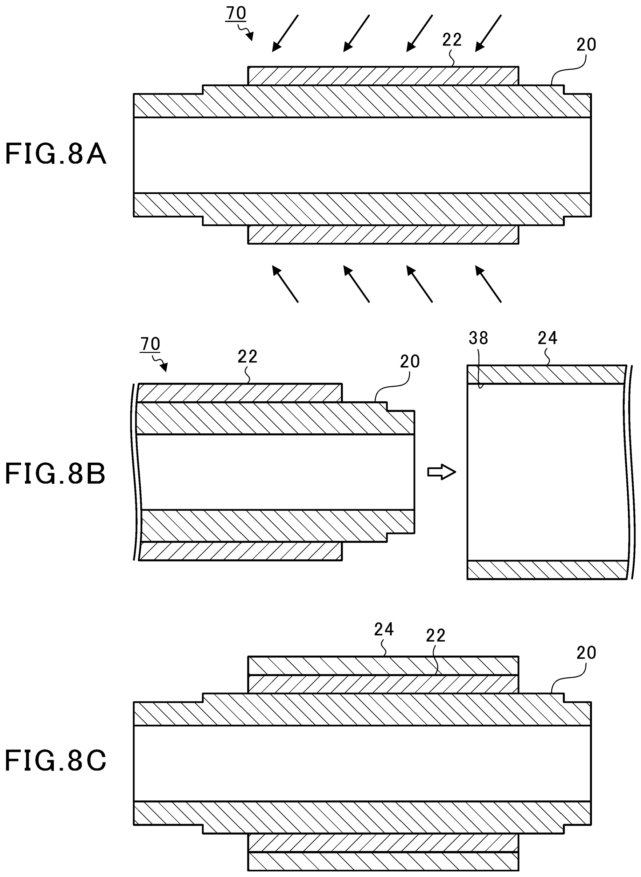

FIG. 8A to FIG. 8C are explanatory views for illustrating the sleeve mounting step (S30). In the sleeve mounting step (S30), as exemplified by the arrows of FIG. 8A, the outer peripheral surface of the ring-shaped magnet 22 of the intermediate 70 formed in the insertion step (S20) is polished. Polishing is performed for, for example, fine adjustment of the outer diameter of the ring-shaped magnet 22.

In the sleeve mounting step (S30), after the polishing, the sleeve 24 is mounted by shrink fit around the outer periphery of the intermediate 70 which has been subjected to polishing, as illustrated in FIG. 8B.

More specifically, in the sleeve mounting step (S30), the inner diameter of the sleeve 24 is expanded by heating the sleeve 24 to a high temperature. As illustrated in FIG. 8B, the intermediate 70 that has been subjected to polishing is inserted into the through hole 38 of the sleeve 24 under a state in which the inner diameter is expanded. As illustrated in FIG. 8C, the temperature of the sleeve 24 is lowered back to normal temperature under a state in which the sleeve 24 is arranged around the outer periphery of the ring-shaped magnet 22. As a result, the inner diameter of the sleeve 24 is shrunk, applying a fastening force to the sleeve 24. The ring-shaped magnet 22 is fixed to the shaft 20 with the fastening force applied to the sleeve 24. In this manner, the rotor 14 is manufactured.

When the sleeve 24 is mounted by shrink fit, the ring-shaped magnet 22 is firmly fixed onto the shaft 20. As a result, in this embodiment, even when the rotor 14 is rotated at a high speed, the separation of the ring-shaped magnet 22 from the shaft 20 can be prevented by the sleeve 24.

A specific method of mounting the sleeve 24 is not limited to shrink fit. The sleeve 24 may be mounted by, for example, cooling fit. The cooling fit involves inserting the intermediate 70 into the through hole 38 of the sleeve 24 under a state in which the intermediate 70 is cooled to have a reduced outer diameter, and increasing the temperature of the intermediate 70 back to normal temperature after the insertion. Further, the sleeve 24 may be mounted by press-fitting the intermediate 70 into the through hole 38 of the sleeve 24.

As described above, the method of manufacturing the rotor 14 according to this embodiment includes the ring-shaped magnet forming step (S10) of forming the ring-shaped magnet 22 by arranging the plurality of segment magnets 30 that have been magnetized, in a ring shape. The method of manufacturing the rotor 14 according to this embodiment includes the insertion step (S20) of inserting the shaft 20 serving as a rotary shaft into the through hole 28 of the ring-shaped magnet 22 from the axial end portion of the shaft 20. The method of manufacturing the rotor 14 according to this embodiment includes the sleeve mounting step (S30) of mounting the sleeve 24 for fixing the ring-shaped magnet 22 to the shaft 20 to the outer periphery of the ring-shaped magnet 22 that is positioned around the outer periphery of the shaft 20.

As described above, in the method of manufacturing the rotor 14 according to this embodiment, the ring-shaped magnet 22 is mounted to the shaft 20 by being moved in the axial direction of the shaft 20. Thus, in this embodiment, even when the ring-shaped magnet 22 is attracted to the shaft 20 by the magnetic force of the ring-shaped magnet 22, impact generated when the ring-shaped magnet 22 is brought into contact with the shaft 20 can be suppressed. As a result, in the method of manufacturing the rotor 14 according to this embodiment, damage to the ring-shaped magnet 22 can be suppressed, and hence deterioration of performance of the motor using the rotor 14 manufactured by this method can be suppressed.

Further, in the method of manufacturing the rotor 14 according to this embodiment, the ring-shaped magnet 22 formed from the segment magnets 30 that have been magnetized in advance is arranged around the shaft 20. Thus, in this embodiment, in comparison to the configuration in which the segment magnets 30 are magnetized after the segment magnets 30 are arranged around the shaft 20, the segment magnets 30 can more easily be magnetized. As a result, in the method of manufacturing the rotor 14 according to this embodiment, the ring-shaped magnet 22 that has been appropriately magnetized can be formed. Accordingly, deterioration of performance of the motor using the rotor 14 manufactured by this method can be suppressed.

Thus, with the method of manufacturing the rotor 14 according to this embodiment, deterioration of performance of the motor using the rotor 14 manufactured by this method can be suppressed.

Further, the method of manufacturing the rotor 14 according to this embodiment enables easy manufacture of the rotor 14 with a simple jig instead of a complex jig by performing the ring-shaped magnet forming step (S10), the insertion step (S20), and the sleeve mounting step (S30) in the stated order.

The embodiment has been described above with reference to the attached drawings, but needless to say, the present disclosure is not limited to the embodiment. It is apparent that those skilled in the art may arrive at various alterations and modifications within the scope of claims, and those examples are construed as naturally falling within the technical scope of the present disclosure.

### Reference Signs List

1: motor, 14: rotor, 20: shaft, 22: ring-shaped magnet, 24: sleeve, 28: through hole, 30: segment magnet, 40: ring-shaped magnet forming jig, 60: insertion jig, S10: ring-shaped magnet forming step, S11: first magnet placement step, S12: second magnet placement step, S13: side-by-side arrangement step, S14: jig removing step, S20: insertion step, S30: sleeve mounting step

## Claims

1. A method of manufacturing a rotor, comprising:
a ring-shaped magnet forming step of forming a ring-shaped magnet by arranging a plurality of segment magnets that have been magnetized, in a ring shape;
an insertion step of inserting a shaft serving as a rotary shaft into a through hole of the ring-shaped magnet from an end portion of the shaft on an axial of the shaft; and
a sleeve mounting step of mounting a sleeve so as to surround the ring-shaped magnet positioned around an outer periphery of the shaft.

2. The method of manufacturing a rotor according to claim 1,
wherein the ring-shaped magnet forming step includes:
a first magnet placement step of placing a first magnet among the plurality of segment magnets on an outer peripheral surface of a ring-shaped magnet forming jig having a columnar or cylindrical shape;
a second magnet placement step of placing a second magnet among the plurality of segment magnets at a position spaced apart in an axial direction and a circumferential direction of the ring-shaped magnet forming jig from a position at which the first magnet is placed on the outer peripheral surface of the ring-shaped magnet forming jig; and
a side-by-side arrangement step of arranging the first magnet and the second magnet side by side in the circumferential direction of the ring-shaped magnet forming jig by moving at least one of the first magnet or the second magnet in the axial direction of the ring-shaped magnet forming jig.

3. The method of manufacturing a rotor according to claim 2,
wherein the ring-shaped magnet forming step includes a jig removing step of removing the ring-shaped magnet forming jig from the ring-shaped magnet formed around the ring-shaped magnet forming jig.

4. The method of manufacturing a rotor according to claim 2,
wherein the ring-shaped magnet forming jig has an end portion being mountable to the end portion of the shaft, and
wherein, in the insertion step, the ring-shaped magnet positioned on the outer peripheral surface of the ring-shaped magnet forming jig that has been mounted to the shaft is moved along the ring-shaped magnet forming jig onto an outer peripheral surface of the shaft.

5. The method of manufacturing a rotor according to claim 1,
wherein, in the ring-shaped magnet forming step, adjacent segment magnets among the plurality of segment magnets are bonded to each other with an adhesive.

6. The method of manufacturing a rotor according to claim 1,
wherein, in the insertion step, an insertion jig having a tapered outer peripheral surface is mounted to the end portion of the shaft, and the shaft is inserted into the through hole of the ring-shaped magnet from the end portion to which the insertion jig has been mounted.
